# EUROPEAN PATENT APPLICATION

(11) **EP 2 277 814 A2**
(43) Date of publication of application: **26.01.2011**
(21) Application number: 10169942.9
(22) Date of filing: 19.07.2010
(51) Int. Cl.: B65H 31/30, B65H 31/10

(54) **Method and System for Accumulating and Transferring a Sheet Stack**

(30) Priority: 20.07.2009 US 506235
(71) Applicant: Xerox Corporation, Rochester, NY 14644 (US)
(72) Inventor: Reid, Gordon B., Walworth, NY 14568 (US); Rothfuss, Kevin A., Webster, NY 14580 (US); Eyngorn, Jacob, Penfield, NY 14526 (US)
(74) Representative: Grünecker, Kinkeldey, Stockmair & Schwanhäusser Anwaltssozietät

(57) **Abstract**

An apparatus (100) for transferring a load is described. The apparatus employs a rack (102), which is vertically movable between a loading position and a rack transfer position. The rack has a ribbed structure. Further, a horizontally movable cart (106) in the apparatus can shift between a cart transfer position and an unloading position. The cart, like the rack, is also a ribbed structure including a number of ribs. The rack ribs and the cart ribs are positioned to intercalate in the respective rack and cart transfer positions. The apparatus also includes a pusher (111) for moving the cart from the transfer position to the unloading position.

## Description

### TECHNICAL FIELD

The presently-disclosed embodiments generally relate to methods and systems for transferring articles in a production environment. More particularly, the disclosure relates to transferring articles from a machine to another location.

### BACKGROUND

The embodiments disclosed below relate to devices in which sheets (sheet material including paper, corrugated cardboard, or the like) are processed in a stream and then stacked at the end of a process or machine, generally on a conveyor device that descends as sheets are added to the top of the stack. When the stack is complete or the conveyer device is full, however, the load must be removed, an operation which generally requires the intervention of an operator. If no operator is available, the machine shuts down until one is available.

Consider the example of a finisher for an image forming apparatus such as a copier, a printer, or a facsimile machine. The finisher may perform any number of operations, such as predetermined punching, stapling, and the like. In high-speed, high-volume printers or copiers, print job sets must be frequently unloaded from an output stacking tray. Furthermore, such high volume reproduction machines typically are shared usage or copy center machines, receiving multiple print jobs from many different users, requiring high productivity. Thus, when a job is completed or the output stacking tray is full, the finisher shuts down until an operator attends to it, and the resulting shutdown time causes a loss of productivity.

It would be highly desirable to have a relatively simple and cost effective device for providing a high production customer with the ability to automatically unload consecutive stacks of sheets delivered by a device. Such a solution would allow customers to maintain almost constantly running machines with a minimum number of attending operators, ensuring maximum productivity.

### SUMMARY

According to aspects illustrated herein, there is provided an apparatus for transferring a load. The apparatus employs a rack, which is vertically movable between a loading position and a rack transfer position. The rack has a ribbed structure, such that the upper surfaces of the rack ribs define a loading surface. Further, a horizontally movable cart in the apparatus can shift between a cart transfer position and an unloading position. The cart, like the rack, is also a ribbed structure including a number of ribs, the upper surface of which defines a pallet surface. The rack ribs and the cart ribs are positioned to intercalate in the respective rack and cart transfer positions. The apparatus also includes a pusher for moving the cart from the transfer position to the unloading position.
In a further embodiment the apparatus further comprises an elevator system for vertically moving the rack between the loading position and the rack transfer position.
In a further embodiment the loading surface drops below the pallet surface for transferring the stack of sheets.
In a further embodiment the pusher retracts after moving the cart from the transfer position to the unloading position.
In a further embodiment the pusher further includes at least one of:
a push plate;
one or more timing belts;
one or more slide rods;
one or more switches; or
a motor.
In a further embodiment the apparatus further comprises a sensing device for sensing whether the stack of sheets is correctly transferred.

Another embodiment disclosed here is a method for transferring a load. The method involves receiving a load on a rack, which is in a loading position. The rack has a ribbed structure. The rack moves the load towards a cart, which also includes a number of ribs. The rack ribs and the cart ribs are positioned to intercalate, allowing for a transfer of the load from the rack to the cart. Having obtained the load, the cart moves to an unloading position, while the rack repositions itself to the loading position.

### BRIEF DESCRIPTION OF THE DRAWINGS

**FIG. 1** illustrates an exemplary embodiment of an apparatus for transferring a load.

**FIG. 2** illustrates the apparatus where both the rack and the cart are in their respective transfer positions.

**FIG. 3** is a cross-sectional view of the rack and cart in their respective transfer positions, taken on plane X - Y of FIG. 2.

**FIG. 4** shows the apparatus being disposed to unload a stack of sheets available for collection by an operator.

**FIG. 5** shows the apparatus in position to start a second job, following the completion of an earlier job.

**FIG. 6** is a flowchart of a method for transferring a load in a finisher, allowing unattended unloading of a job.

### DETAILED DESCRIPTION

The following detailed description is made with reference to the figures. Preferred embodiments are described to illustrate the present invention, not to limit its scope, which is defined by the claims. Those of ordinary skill in the art will recognize a variety of equivalent variations on the description that follows.

According to aspects of the disclosure illustrated here, a machine for transferring a load is described. The machine employs a rack, which is vertically movable between a loading position and a rack transfer position. The rack has a ribbed structure, such that the upper surfaces of the rack ribs define a loading surface. Further, a horizontally movable cart in the apparatus can shift between two positions - a cart transfer position, located directly under the rack, and an unloading position, positioned for convenient off-loading. The cart, like the rack, is also a ribbed structure including a number of ribs, the upper surface of which defines a pallet surface. The rack ribs and the cart ribs are positioned to intercalate in the respective rack and cart transfer positions. The machine also includes a pusher for moving the cart from the transfer position to the unloading position. The machine is designed to allow continuous processing of loads and for minimizing the time for which the machine is idle, waiting for an operator to perform unloading.

The exemplary embodiments discussed below perform certain operations on sheet media within a finisher and then stacks them for output. Various other embodiments, however, can be anticipated to address many different systems or applications in which a load of articles is transferred out of a collection area on a production machine, allowing for an unattended unload and continued operation of the machine.

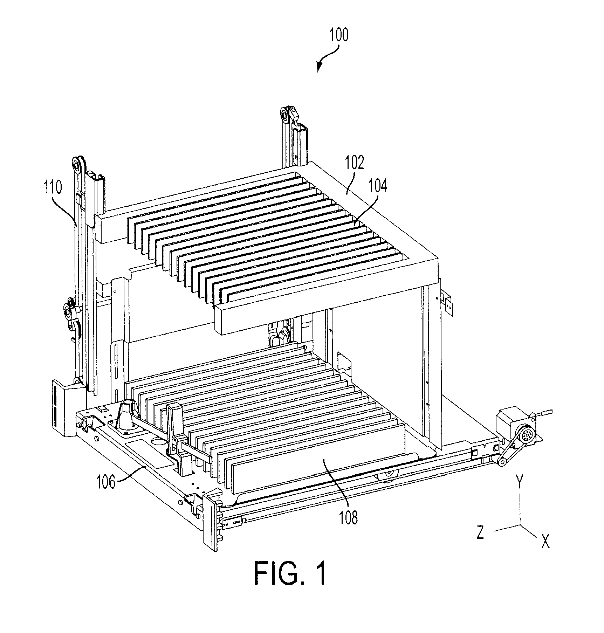

FIG. 1 illustrates an exemplary embodiment of an apparatus 100 for transferring a load. The apparatus 100 shown here lays out the elements performing the unloading function of a finisher.

In this embodiment, the apparatus 100 performs operations on a stream of sheets, and then the sheets are stacked to form a load or stack for output. The apparatus 100 can be associated with any image forming apparatus such as a digital copier, bookmaking machine, facsimile machine, multi-function machine, etc., which performs a print outputting function for any purpose. Moreover, the apparatus 100 may perform any number of operations, such as, predetermined punching, stapling, and similar operations, for each medium, such as a sheet, on which an image is formed by the image forming apparatus.

As used throughout this disclosure, the terms "sheet" or "document" refer to physical sheets of paper, plastic, or other suitable substrate, whether precut or initially web fed and then cut. A "job" is normally a set of related sheets, usually a collated copy set copied from a set of original document sheets or electronic document page images, from a particular user, or otherwise related. It should be understood that the concepts set out here can be employed both in devices handling relatively small sheets, such as paper, as well as apparatus handling large sheets of material such as corrugated cardboard material.

The apparatus 100 includes a vertically movable rack 102 having multiple ribs, referred to as rack ribs 104. Sheets (not shown in FIG. 1) are stacked onto the rack 102, which moves up and down within the apparatus 100, alternating between a loading position and a rack transfer position. The sheets collect on the upper surface of this rack 102, which defines a loading surface for the sheets. In most applications, the rack 102 sinks as successive sheets are added, converting the stream of sheets into a stack. Once the rack 102 is full or the job is complete, the stack of sheets can be lowered onto a cart 106, which in one implementation is on the floor, beneath the rack 102. Being horizontally movable, the cart 106 can alternate between a cart transfer position and an unloading position, respectively directly under the moveable rack 102 and moved away from that element. The cart 106, like the rack 102, includes multiple cart ribs 108, their upper surface defining a pallet surface. The finisher components, such as the rack 102 and the cart 106 can be made of metal, plastic, or elastomeric materials. A larger assembly, handling corrugated cardboard, for example, would require a more robust construction.

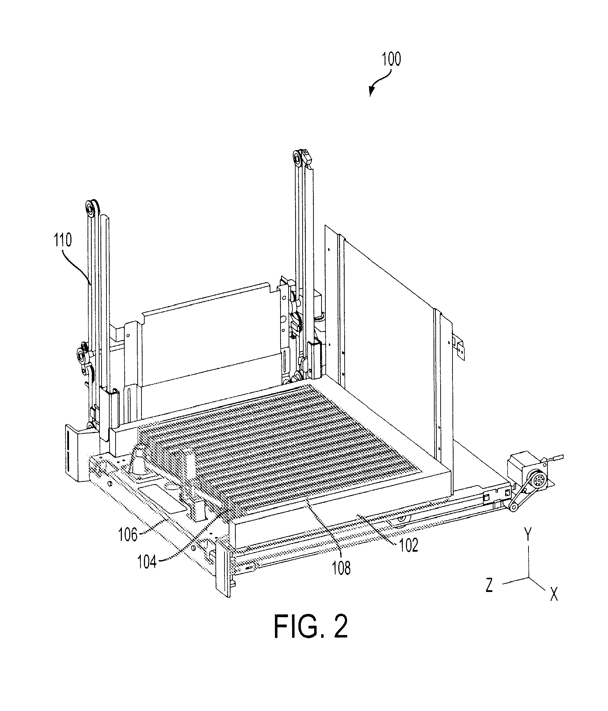

FIG. 2 illustrates the apparatus 100 when both the rack 102 and the cart 106 are in their respective transfer positions. The cart ribs 108 are positioned to intercalate with the rack ribs 104, as can be seen in FIG. 2. The rack 102 is attached to an elevator system 110, which moves up and down within the apparatus 100. On sensing that a transfer is required, (which may be triggered by an event such as the completion of a job or the rack 102 being full), the elevator system 110 lowers the rack 102 from the loading position to the rack transfer position.

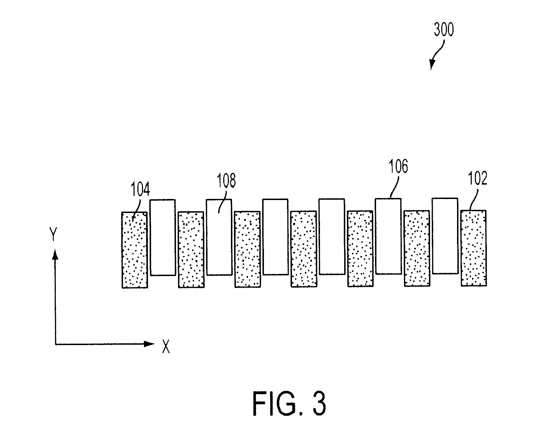

Turning to FIG. 3, one embodiment of a cross-sectional view of the rack 102 and cart 106 in their respective transfer positions, taken on plane X - Y of FIG. 2 is shown. The loading surface of the rack 102, formed by the upper surfaces of the rack ribs 104, drops below the upper surface of cart ribs 108 (or the pallet surface) on the cart 106, transferring the stack of sheets (not shown in FIG. 3 for clarity) to the cart 106. This ensures a smooth transition of the stack to the cart 106, and when the cart 106 is repositioned, the entire stack is transported with it, avoiding any sheet slippage or drifting. In an alternative embodiment of the system, useful for situations in which the loads are relatively light or the material can slide easily, the rack ribs 104 and cart ribs 108 can lie at the same level, the transfer occurring when the cart 106 is repositioned. Here, the pallet surface has a higher coefficient of friction that the upper surfaces of the rack ribs 104, for ease of transfer. Further, a sensing device identifying the bottom sheet of the stack is present for providing confirmation that the whole stack is correctly transferred.

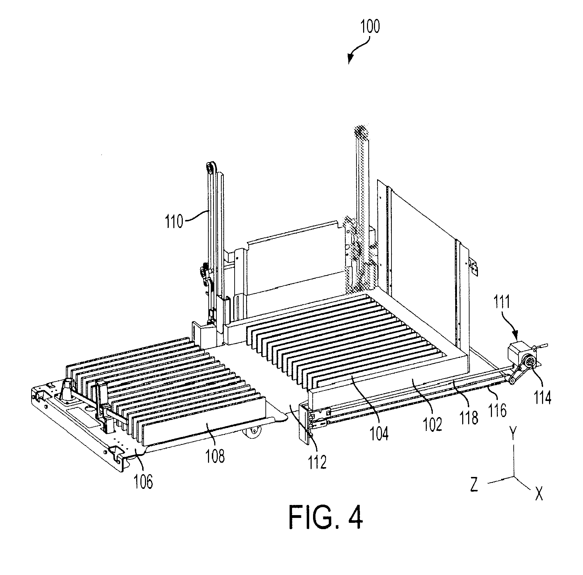

FIG. 4 shows the apparatus 100 being disposed to unload the stack of sheets available for collection by an operator. After the transfer has occurred, a door (not shown in FIG. 4) on the front of the apparatus 100 opens and a pusher 111, which includes a push plate 112, a motor 114, timing belts 116, slide rods 118, and switches (not shown in FIG. 4), pushes the cart 106 outside the apparatus 100 to the unloading position. Further, a switch may energize the motor 114, which in conjunction with the timing belts 116 and slide rods 118, drives the push plate 112, and consequently the cart, in the forward direction.

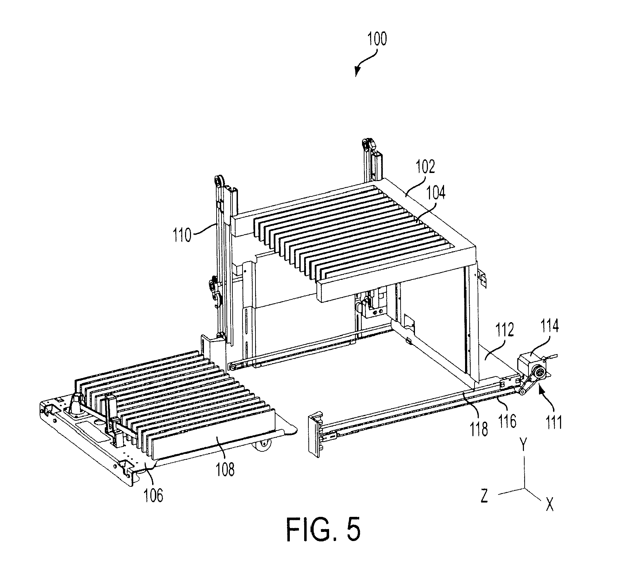

FIG. 5 shows the apparatus 100 in a position to start a second job, following the completion of an earlier job. After the cart 106 has exited the apparatus 100 as shown in FIG. 4, the front door closes just above the push plate 112; the pusher 111 retracts, and the rack 102, now empty, moves back up to the loading position to start a new job, unattended. In one implementation, the pusher 111 continues to drive the stack of sheets forward until a switch indicating the forward limit is actuated. At this point, the pusher 111 reverses, and the motor 114 begins to drive backwards, into the apparatus 100. The design of the pusher 111 (including the push plate 112, the motor 114, the timing belts 116, and the slide rods 118) and the rack 102 (including the rack ribs 104) are scaled to fit the size or weight of the load on the cart 106.

Further, as the stack is pushed out of the apparatus 100, it is visibly apparent to an operator that the output stack needs attention. The operator may collect the stack and slide the cart 106 manually into the apparatus 100, making the cart 106 available for the next job. Alternatively, the cart 106 may slide back to the cart transfer position automatically, once the stack has been collected.

The apparatus 100 can be associated with any known image forming device dealing with transfer of a load, allowing for an unattended unload and subsequent loading of another load.

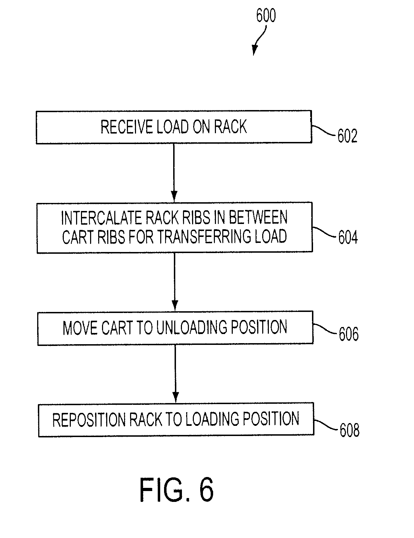

FIG. 6 is a flowchart of a method 600 for transferring a load in a finisher, allowing unattended unloading of a job. The present embodiment performs certain operations on sheet media and then stacks them for output, however, various other embodiments can be anticipated to address many different systems or applications in which a load of articles is transferred out of a collection area on a production machine, allowing for an unattended unload and continued operation of the machine.

The finisher can be associated with any image forming apparatus such as a digital copier, bookmaking machine, facsimile machine, multi-function machine, etc., which performs a print outputting function. Moreover, the finisher may perform any number of operations, such as, predetermined punching, stapling, etcetera, for each medium, such as a sheet, on which an image is formed by the image forming apparatus.

In the present embodiment, the terms "sheet" or "document" refers to physical sheets of paper, plastic, or other suitable physical substrate for printing images, whether precut or initially web fed and then cut. A "job" is normally a set of related sheets, usually a collated copy set copied from a set of original document sheets or electronic document page images, from a particular user, or otherwise related.

A rack having multiple ribs receives a load (step 602), which includes print media in the present embodiment. The rack is vertically movable between a loading position and a rack transfer position. When the rack is in the loading position, print media such as sheets is stacked onto the rack, which in most applications, sinks as successive sheets are added, converting the stream of sheets into a stack. The sheets collect on the upper surface of this rack, which can move up and down within the finisher. Once the rack is full or the job is complete, the stack of sheets is lowered towards a horizontally movable cart, which in one implementation, is on the floor, beneath the rack. The cart, like the rack, includes multiple ribs and is movable between a cart transfer position and an unloading position.

An elevator system renders the rack vertically movable within the finisher. On sensing that a transfer is required, (which may be triggered by an event such as the completion of a job or the rack being full), the rack is lowered towards the cart, the rack ribs intercalating between the cart ribs, as shown at step 604. Both the rack and cart are in their respective rack and cart transfer positions. The upper surface of the rack ribs drops below the upper surface of the cart ribs on the cart, resulting in a transfer of the stack of sheets to the cart. This ensures a smooth transition of the stack to the cart, and when the cart is repositioned, the entire stack is transported with it, avoiding any sheet slippage or drifting. In an alternate embodiment, the loading surface lies at the level of the pallet surface, and the transfer occurs when the cart is repositioned. Here, the pallet surface has a higher coefficient of friction that the loading surface, for ease of transfer. Further, a sensing device identifying the bottom sheet of the stack is present for providing confirmation that the whole stack is correctly transferred.

The elevator mechanism itself is entirely conventional, scaled to fit the size of the finisher. It is expected that the elevator is controlled by the overall control system of the finisher, operating through conventional solenoid / controller technology or under computer control. Appropriate limit switches and sensors can signal system status to the finisher control system.

After the transfer has occurred, a door on the front of the finisher opens and a pusher including a push plate, a motor, timing belts, slide rods, and switches, pushes the cart outside the finisher to an unloading position at step 606. The stack of sheets is stacked to form a load for delivery to an operator. Further, a switch may energize the motor, which in conjunction with the timing belts and slide rods, drives the push plate, and consequently the cart, in the forward direction.

The front door closes just above the push plate subsequent to pushing the cart outside the finisher. The pusher retracts, and as shown at step 608, the empty rack moves back up to the loading position to start a new job, unattended. In one implementation, the pusher continues to drive the stack of sheets forward until a switch indicating the forward limit is actuated. At this point, the pusher reverses, and the motor begins to drive backward into the finisher.

Further, as the stack is pushed out of the finisher, it becomes visibly apparent to an operator that the output stack needs attention. The operator may collect the stack and slide the cart manually into the finisher, following which, the method 600 can be reinitiated. Alternatively, the cart may slide back into the finisher automatically once the stack has been collected.

The disclosed method 600 can be associated with any known image forming device dealing with transfer of a load, allowing an unattended unload and subsequent loading of another load, thus ensuring higher productivity of the image forming device.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

While this specification contains many specific implementation details, these should not be construed as limitations on the scope of any invention or of what may be claimed, but rather as descriptions of features, that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments.

It will be appreciated that several of the above-disclosed and other features and functions, or alternatives thereof, may be desirably combined into many other different systems or applications.

## Claims

1. An apparatus for transferring a load, comprising:
a rack, vertically movable between a loading position and a rack transfer position, including a plurality of rack ribs, the upper surfaces of the rack ribs defining a loading surface;
a cart, horizontally movable between a cart transfer position and an unloading position, including a plurality of cart ribs, the upper surface of the cart ribs defining a pallet surface;
wherein the rack ribs and the cart ribs are positioned to intercalate in the respective rack and cart transfer positions; and
a pusher for moving the cart from the transfer position to the unloading position.

2. The apparatus of claim 1 further comprising an elevator system for vertically moving the rack between the loading position and the rack transfer position.

3. The apparatus of claim 1, wherein the loading surface drops below the pallet surface for transferring the load.

4. The apparatus of claim 1, wherein the pusher retracts after moving the cart from the transfer position to the unloading position.

5. The apparatus of claim 1, wherein the pusher further includes at least one of:
a push plate;
one or more timing belts;
one or more slide rods;
one or more switches; or
a motor.

6. The apparatus of claim 1 further comprising a sensing device for sensing whether the load is correctly transferred.

7. A method for transferring a load, comprising:
providing a rack having a plurality of rack ribs, wherein the rack is movable between a loading position and a rack transfer position;
providing a cart having a plurality of cart ribs, wherein the cart is movable between a cart transfer position and an unloading position;
receiving a load on the rack, wherein the rack is in the loading position;
intercalating the rack ribs in between the cart ribs, the rack and cart being in the respective rack and cart transfer positions, positioning the rack at or below the level of the cart, for transferring the load from the rack to the cart;
moving the cart to the unloading position using a pusher; and
repositioning the rack to the loading position.

8. The method of claim 7, wherein the rack is vertically movable.

9. The method of claim 7, wherein the movement of the rack is performed by an elevator system.

10. The method of claim 7, wherein the step of moving the cart includes horizontal translation of the rack.

11. The method of claim 7 further comprising retracting the pusher after moving the cart to the unloading position.

12. The method of claim 7, wherein the intercalating step further includes positioning the rack below the level of the cart for transferring the load.

13. The method of claim 7 further comprising sensing whether the load is correctly transferred using a sensing device.

14. A method for transferring a load, comprising:
providing a vertically movable rack having a plurality of rack ribs, wherein the rack is movable between a loading position and a rack transfer position;
providing a horizontally movable cart having a plurality of cart ribs, wherein the cart is movable between a cart transfer position and an unloading position;
receiving a load on the rack, wherein the rack is in the loading position;
intercalating the rack ribs in between the cart ribs, the rack and cart being in the respective rack and cart transfer positions, positioning the rack at or below the level of the cart by an elevator system, for transferring the load from the rack to the cart;
moving the cart to the unloading position using a pusher; and
repositioning the rack to the loading position.

15. An apparatus, for accumulating and transferring a stack of sheets, the apparatus comprising:
a rack, vertically movable between a loading position and a rack transfer position, including a plurality of rack ribs, the upper surfaces of the rack ribs defining a loading surface;
a cart, horizontally movable between a cart transfer position and an unloading position, including a plurality of cart ribs, the upper surface of the cart ribs defining a pallet surface;
wherein the rack ribs and the cart ribs are positioned to intercalate in the respective rack and cart transfer positions; and
a pusher for moving the cart from the transfer position to the unloading position.
